(19) Europäisches Patentamt
European Patent Office
Office européen des brevets

(11) **EP 3 457 578 A1**

(12) **EUROPEAN PATENT APPLICATION**

(43) Date of publication:
**20.03.2019 Bulletin 2019/12**

(51) Int Cl.:
**H04B 3/32** *(2006.01)*

(21) Application number: **17191443.5**

(22) Date of filing: **15.09.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Nokia Solutions and Networks Oy 02610 Espoo (FI)**

(72) Inventors:
• MAES, Jochen
  2018 Antwerpen (BE)
• TSIAFLAKIS, Paschalis
  2018 Antwerpen (BE)
• NUZMAN, Carl Jeremy
  New York, Murray Hill NJ 07974-0636 (US)

(74) Representative: **IP HILLS NV Hubert Frère-Orbanlaan 329 9000 Gent (BE)**

(54) **PRE- AND POSTCODER FOR CROSS-TALK CANCELLATION**

(57) Amongst others, a precoder (108) for precoding communication signals to be transmitted over a plurality of communication lines (180-182) to respective customer premises equipment, CPEs (121-129), is disclosed. The precoder is further configured to generate at least a first pre-compensated signal to be transmitted as a common mode, CM, signal over a first communication line of the communication lines, and to generate at least a second pre-compensated signal to be transmitted as a differential mode, DM, signal over the first communication line.

Fig. 1

## Description

## Technical Field

The present invention generally relates to the field of crosstalk cancellation for multi-user access networks. More particular, it relates to, amongst others, a precoder and postcoder for upstream and downstream crosstalk cancellation according to an improved communication architecture.

## Background

The concept of crosstalk cancellation, also referred to as vectoring, is already successfully applied to digital subscriber line systems. Vectoring is for example described in the ITU-T G.993.5 standard and applied in VDSL2 systems to achieve throughputs of up to 300Mbit/s. Also the G.fast standard published under ITU-T G.9700 and G.9701 relies on the concept of vectoring. Vectoring may be performed at the transmitting side where it is referred to as precoding or at the receiving side where it is referred to as postcoding. Precoding and postcoding may further be combined.

By vectoring, higher throughputs have been achieved on existing communication lines. However, the demand for higher throughputs has not yet come to an end and, therefore, there is a need for further improving the digital subscriber line systems that are compatible with existing communication lines.

## Summary

This object is achieved, according to a first aspect, by a precoder for precoding communication signals to be transmitted over a plurality of communication lines to respective customer premises equipment, CPEs; and wherein the precoder is further configured to generate at least a first pre-compensated signal to be transmitted as a common mode, CM, signal over a first communication line of the communication lines, and to generate at least a second pre-compensated signal to be transmitted as a differential mode, DM, signal over the first communication line.

In other words, a second communication channel is created on the communication line thereby creating a greater degree of freedom in providing network access to the CPEs. The second communication channel may for example be used for increasing the throughput by providing a second information stream to the CPEs that are capable of receiving DM and CM signals. This further allows to connect different CPEs to the same communication line wherein the DM and CM transmit signals provide one CPE information stream to one CPE and another information stream to the other CPE. Alternatively, the communication channel created by the CM mode signals may also be used to increase the robustness of the DM communication channel. This may be done by exploiting the coupling between the CM communication channel and all the other communication channels on the communication lines. Alternatively, the greater degree of freedom is exploited for point-to-multipoint (P2MP) communication to facilitate the implementation of vectoring by making the precoder coefficients independent of which CPE on the same communication line is to receive the information stream. It is therefore an advantage that improved performance can be achieved over existing communication lines because only changes are needed within the access node and, optionally, the CPEs for improved capabilities.

According to a second aspect, the disclosure relates to an access node that comprises the precoder according to the first aspect. The access node then further comprises a first CM analogue encoding part to transmit the CM signal over the communication line and a first DM analogue encoding part to transmit the DM signal over the communication line. The first analogue CM encoding part is then configured to transmit the CM signal over the first communication line as a common electrical difference between any of two electrical conductors of the first communication line and a common reference, e.g. ground. The first DM analogue encoding part is then configured to transmit the DM signal over the first communication line as an electrical difference between the two electrical conductors of the first communication line.

According to a preferred embodiment, the first communication line comprises a common segment and multiple terminal segments to be connected to respective CPEs.

The common segment may be part of a bundle of communication lines running together from the access node towards different customer premises. At a customer premise, the communication line is then split into the multiple terminal segments wherein a CPE is connected to each of the terminal segments. The terminal segments may thereby be uncoupled from each other, i.e. there is no cross-talk between the different terminal segments. In such a case, crosstalk will only occur between the DM and CM channel of the same communication line. This is thus a way to provide multiple CPEs to a single communication line where performance degradation can be limited by the introduced CM mode.

In such a case, the access node further comprises a processor for configuration of the precoder. The processor is then further configured to obtain channel state information comprising crosstalk coupling information between CM and DM channel inputs at the access node side and CM and/or DM channel outputs at the CPE side, and to derive therefrom a precoding matrix for generation of the at least first and second pre-compensated signals by the precoder; and wherein the channel state information comprises a channel matrix decomposable into a first channel matrix and a second block diagonal matrix; and wherein the processor is configured to derive the precoding matrix based on the first channel matrix. The processor may be included in the same physical device as the precoder or the analogue encoder, or it may be external to that physical device, for example on a centralized server or in the cloud.

This has the further effect that the first channel matrix comprises coupling coefficients between the CM and DM channel inputs at the access node side and first virtual CM and DM channel outputs associated with the first communication line; and wherein a block of the second block diagonal matrix comprises coupling coefficients between second virtual CM and DM channel inputs and CM and/or DM channel outputs of the terminal segment associated with a respective CPE; and wherein the second virtual CM and DM channel inputs are associated with the communication line and coupled to the first virtual CM and DM channel outputs.

It is thus an advantage that the maximum size of the precoding matrix is determined by the number of communication lines and not by the number of terminal segments. In other words, when the access node comprises an analogue CM and DM encoding part for each communication line, the maximum size of the precoding matrix will be twice the number of communication lines in both dimensions. A further advantage is that this precoding matrix is the same irrespective of the receiving terminal segment - CPE combination over the plurality of communication lines.

According to a further embodiment, the processor is further configured to derive a postcoding matrix from the block, and to provide the postcoding matrix to a CPE coupled to the terminal segment for use in a postcoder.

As there is no or little coupling assumed between the different terminal segments, there will only be further coupling between the CM and DM channel on the same terminal segment. This is also reflected by the properties of the block diagonal matrix. It is therefore an advantage that this further crosstalk can be mitigated by a postcoding matrix in each CPE that only has the received signals at the respective CPE as its input.

According to a third aspect, a customer premises equipment, CPE, is disclosed. This CPE further comprises a postcoder that is configured to operate with this postcoding matrix. The postcoding matrix provided by the processor may be such that the CPE uses the provided postcoding matrix unaltered, thereby replacing any already available postcoder. Alternatively, the provided postcoder matrix may be such that the CPE concatenates the provided postcoding matrix with the already available postcoder.

The above aspects are all related to a downstream scenario wherein data is transmitted by an access node towards remote CPEs. As the access node is centralized, most cross-talk is mitigated by pre-coding thereby avoiding the need to communicate the received signals at the CPEs among these CPEs. In a similar way, these aspects may also be adapted to an upstream case wherein data is transmitted by the different CPEs towards the access node. In this case, cross-talk is again mitigated at the access node by post-coding.

To this respect, according to a fourth aspect, a postcoder is disclosed for postcoding communication signals received over a plurality of communication lines from respective customer premises equipment, CPEs; and wherein the postcoder is further configured to generate postcoded signals from at least a first received signal received as a common mode, CM, signal from a first communication line of the communication lines, and from at least a second received signal received as differential mode, DM, signal from the communication line.

The first communication line may further comprise a common segment and multiple terminal segments to be connected to respective CPEs.

According to a fifth aspect, an access node is disclosed comprising the postcoder according to the fourth aspect, a first CM analogue decoding part and a first DM analogue decoding part; and wherein each communication line comprises two electrical conductors; and wherein the first analogue CM decoding part is configured to receive the CM signal from the first communication line as a common electrical difference between any of two electrical conductors of the first communication line and a common reference; and wherein the first DM analogue decoding part is configured to receive the DM signal from the first communication line as an electrical difference between the two electrical conductors of the first communication line.

According to a preferred embodiment, the access node according to the fifth aspect further comprises a processor for configuration of the postcoder; wherein the processor is further configured to obtain channel state information comprising crosstalk coupling information between CM and/or DM channel inputs at the s CPE side and CM and DM channel outputs at the access node side, and to derive therefrom a postcoding matrix for generation of the postcoded signals by the postcoder; and wherein the channel state information comprises a channel matrix decomposable into a first block diagonal channel matrix and a second channel matrix; and wherein the processor is configured to derive the postcoding matrix based on the second channel matrix.

The second channel matrix may further comprise coupling coefficients between first virtual CM and DM channel inputs associated with the first communication line and the CM and DM channel outputs at the access node side and associated with the plurality of communication lines; and wherein a block of the first block diagonal matrix comprises coupling coefficients between the CM and/or DM channel inputs at the CPE side associated with the first communication line (121-123) and second virtual CM and DM channel outputs associated with the first communication line and coupled to the first virtual CM and DM channel inputs.

The access node may further be configured to derive a precoding matrix from the block, and to provide the precoding matrix to a CPE coupled to the terminal segment for use in a precoder.

According to a sixth aspect, a customer premises equipment, CPE, is disclosed comprising a precoder configured to operate with the precoding matrix according to the fifth aspect.

According to a seventh aspect, a postcoder is disclosed for postcoding communication signals received over a first communication line of a plurality of communication lines from an access node by a customer premises equipment, CPE; and wherein the postcoder is further configured to generate postcoded signals from at least a first received signal received as a common mode, CM, signal from the first communication line of the communication lines, and from at least a second received signal received as differential mode, DM, signal from the first communication line.

The postcoder may further be configured to operate according to a postcoding matrix based on channel state information further comprising crosstalk coupling information between DM channel inputs at the access node side and CM and DM channel outputs at the CPE side; and wherein the channel state information comprises a channel matrix decomposable into a first channel matrix and a second block diagonal matrix; and wherein the first channel matrix comprises coupling coefficients between DM channel inputs at the access node side and first virtual CM and DM channel outputs associated with the first communication line; and wherein a block of the second block diagonal matrix comprises coupling coefficients between second virtual CM and DM channel inputs and CM and DM channel outputs at the CPE side; and wherein the second virtual CM and DM channel inputs are associated with the first communication line and coupled to the first virtual CM and DM channel outputs; and wherein the postcoding matrix is further based on the second block diagonal matrix.

According to an eighth aspect, a precoder is disclosed for precoding communication signals transmitted over a first communication line of a plurality of communication lines from a customer premises equipment, CPE to an access node; and wherein the precoder is further configured to generate at least a first pre-compensated signal to be transmitted as a common mode, CM signal over the first communication line, and to generate at least a second pre-compensated signal to be transmitted as a differential mode, DM, signal over the first communication line.

The precoder may further be configured to operate according to a precoding matrix based on channel state information further comprising crosstalk coupling information between CM and DM channel inputs at the CPE side and DM channel outputs at the access node side; and wherein the channel state information comprises a channel matrix decomposable into a first block diagonal matrix and a second channel matrix; and wherein a block of the first block diagonal matrix comprises coupling coefficients between physical CM and DM channel inputs at the CPE side and first virtual CM and DM channel outputs; and wherein the second channel matrix comprises coupling coefficients between second virtual CM and DM channel inputs and physical DM channel outputs at the access node side; and wherein the first virtual CM and DM channel outputs are associated with the first communication line and coupled to the second virtual CM and DM channel outputs; and wherein the precoding matrix is further based on the second block diagonal matrix.

## Brief Description of the Drawings

Fig. 1 illustrates an access network comprising an access node with a p-coder and a plurality of Customer Premises Equipment with p-coders according to an embodiment of the invention; and

Fig. 2 illustrates an access network comprising an access node with a precoder and a plurality of Customer Premises Equipment according to an embodiment of the invention; and

Fig. 3 illustrates an access network comprising an access node with a precoder and a plurality of Customer Premises Equipment with a postcoder according to an embodiment of the invention; and

Fig. 4 illustrates an access network comprising an access node with a precoder and a plurality of Customer Premises Equipment with a postcoder according to an embodiment of the invention; and

Fig. 5 illustrates an access network comprising an access node with a precoder and a plurality of Customer Premises Equipment with a postcoder according to an embodiment of the invention.

## Detailed Description of Embodiment(s)

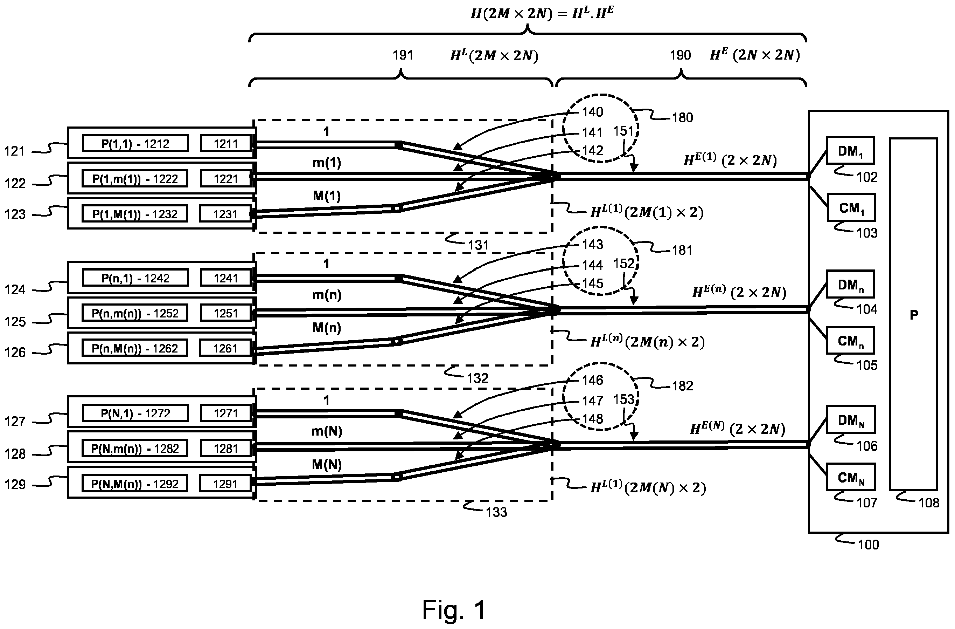

Fig. 1 illustrates an access network comprising an access node 100 and a plurality of Customer Premises Equipment, CPEs, 121- 129 according to an embodiment of the invention. The access node 100 is connected to the CPEs by communication lines 180-182. Each communication line is connected at the access node 100 by an analogue conversion encoding and decoding part that further comprises a differential mode, DM, analogue encoding and decoding part 102, 104, 106 and a common mode, CM, analogue encoding and decoding part 103, 105, 107. Each of the communication lines 180-182 comprises a common segment 151-153 and may further be split into a plurality of terminal segments 140-142, 143-145, 146-148. This way, more than one CPE may be connected to a single communication line. Each such CPE may for example be located at a different location of a user premise. The common segment then runs from the access node 100 to a splitter at a user premise and the terminal segments run from the splitter within the user premise to the respective CPEs. The common segments may further be bundled together from the access node 100 onwards. The communication lines are terminated at the CPEs 121-129 by a respective analogue and/or digital encoding/decoding part 1211, 1221, 1231, 1241, 1251, 1261, 1271, 1281, 1291.

A DM analogue encoding and decoding part is capable of respectively transmitting and receiving differential mode communication signals on and from a respective communication line. A differential mode communication signal is based on a complementary component of communication signals that are transmitted over different conductors of the communication line. The CM communication signal is then represented by an electrical difference between the pair of communication signals. The communication line may for example correspond to a twisted pair or coaxial cable. The electrical difference may then for example be represented by a voltage difference $v_{dm}$ between the different conductors:

$$v_{dm} = v_{c1} - v_{c2}$$

wherein
$v_{c1}$ and $v_{c2}$ are the voltages at a first and second conductor of the communication line with respect to a common reference, e.g. ground.

A CM analogue encoding and decoding part is capable of respectively transmitting and receiving common mode communication signals respectively on and from the communication line. A common mode communication signal is based on a common component of the communication signals that are transmitted over different conductors of the same communication line. The CM communication signal is then represented by a common electrical difference between the communication signals and a common reference. The electrical difference may then for example be represented by a voltage difference $v_{cm}$ wherein:

$$v_{cm} = \frac{v_{c1}+v_{c2}}{2}$$

Fig. 1 illustrates a general case wherein:

- the access node 100 connects to a communication line $n$ via a DM analogue encoding/decoding part $DM_n$ and a CM analogue encoding/decoding part $CM_n$ wherein $n = 1 ... N$ and, hence, $N$ is the total number of communication lines 180-182; and
- a communication line n (181) comprises a common segment (152) and terminal segments $m(n)$ (143, 144, 145) wherein $m(n) = 1 ... M(n)$ and $M(n)$ is the number of terminal segments in communication line $n$; and
- each terminal segment $m(n)$ is further terminated by a CPE $CPE(n, m(n))$; and
- the total number of CPEs is $M = \sum_{N}^{n=1} M(n)$

In a downstream case, communication signals are transmitted from the access node 100 over a communication line to a CPE. These communication signals will also couple to other communication lines and be received by other CPEs as cross-talk. The coupling may occur between DM signals, between CM signals and between DM and CM signals. Coupling between DM and CM signals may further occur on the same communication line because the communication line may be considered as two communication channels, i.e. a DM and CM communication channel. In the most generic case, the relation between the DM and CM signals transmitted at the access node and DM and CM signals received at the different CPEs is characterized by a channel matrix $H(2M\times2N)$ wherein the dimension of the matrix is denoted between the brackets. The channel matrix may further be used to derive a precoding matrix for use in a p-coder 108 in the access node 100 and/or a postcoding matrix for use in a p-coder 1212, 1222, 1232, 1242, 1252, 1262, 1272, 1282, 1292 in a respective CPE 121-129. In the downstream case, p-coder 108 serves as a precoder and p-coder 1212, 1222, 1232, 1242, 1252, 1262, 1272, 1282, 1292 in the respective CPEs serves as a post-coder.

According to an embodiment, downstream cross-talk cancellation may be performed by the precoder 108. The precoding matrix for use in the precoder may then be derived from the channel matrix H. The channel matrix may for example be obtained by a pilot-based method. In this case the CM and DM signals are pre-compensated in the precoder before transmission by the respective CM and DM analogue conversion part. By this precoding, the cross-talk in the CM and DM signals received at the CPEs will be at least partially mitigated.

The more CPEs are connected to a single communication line, the more complex the cross-talk compensation becomes, i.e., the complexity is not only dependent on the number of communication lines, but also by the total number of connected CPEs. According to a preferred embodiment the computational complexity of the cross-talk mitigation and thus of the precoder 108 is further reduced by the assumption that there will be nearly no cross-talk between communication lines after the point where the communication line is split into the different terminal segments. For example, within the area 131 after the common segment 151 of line 180, cross-talk between the terminal segments 140, 141 and 142 of communication line 180 but also cross-talk from the other lines 181, 182 is assumed negligible. A terminal segment will only suffer from mutual crosstalk between the CM and DM communication signals on the same communication line. Cross-talk that occurs within the common segments 151-153 is further referred to as inter-home cross-talk. Cross-talk that occurs within the terminal segments 140-148 is further referred to as intra-home cross-talk. Following this assumption, for the downstream case, the channel matrix may be decomposed in an external channel matrix $H^E$ and in-home channel matrix $H^L$ as follows:

$$H(2M \times 2N) = H^L(2M \times 2N).H^E(2N \times 2N)$$

and wherein $H^L$ is a block diagonal matrix which can be represented as follows:

$$H^L = \begin{bmatrix} H^{L(1)}(2M(1) \times 2) & & & & \\ & \ddots & & & \\ & & H^{L(n)}(2M(n) \times 2) & & \\ & & & \ddots & \\ & & & & H^{L(N)}(2M(N) \times 2) \end{bmatrix}$$

and wherein

$H^{L(n)}(2M(n) \times 2)$ is the in-house channel matrix between DM and CM signals at the end of the common section 152 of the $n^{th}$ communication line 181 and the DM and CM signals received at the respective CPEs 124-126; and all other elements of the matrix $H^L$ are zeros;
and wherein the external channel matrix can be written as a vertical concatenation of matrices $H^{E(n)}$ as follows:

$$H^E = \begin{bmatrix} H^{E(1)}(2 \times 2N) \\ \vdots \\ H^{E(n)}(2 \times 2N) \\ \vdots \\ H^{E(N)}(2 \times 2N) \end{bmatrix}$$

and wherein $H^{E(n)}(2 \times 2N)$ is the external channel matrix between input signals at the CM and DM analogue encoding part 102-107 of all communication lines 180-182 of the access node 100 and DM and CM signals at the end of the common section 152 of the $n^{th}$ communication line 181.

Consequently, the channel matrix $H^n$ describing the channel as seen by the CPEs 124-126 that are connected by the nth communication line 181 to all analogue conversion parts 104, 105 of access node 100 can be decomposed as:

$$H^n(2M(n) \times 2N) = H^{L(n)}(2M(n) \times 2).H^{E(n)}(2 \times 2N)$$

A method to derive the pre- and postcoders is to consider the solution space as finding a common generalized inverse. For a combination of certain CPEs, i.e. one active CPE for each customer premise, the generalized inverse forms a set of suitable precoders. Because of the assumed absence of inter-home coupling between the terminal segments, the intersection between these sets is non-empty and a common precoder exists. Therefore, cross-talk may be mitigated by a $2N \times 2N$ precoder 108 at the access node 100 and by the $2 \times 2$ postcoders 1212, 1222, 1232, 1242, 1252, 1262, 1272, 1282, 1292 in the respective CPEs.

A first method to obtain the pre- and postcoders is by brute force, i.e. by finding the pre- and postcoders from a measured channel matrix *H* through iteration over possible pre- and postcoders. A second method to find suitable pre- and post-coders is through tracking. After obtaining feedback samples from the multiple CPEs, tracking allows to update the precoder to reduce the error samples. The feedback samples allow to differentiate between a virtual inter-home crosstalk, used for updating the precoder, and a virtual intra-home cross-talk used for updating the postcoders.

A third, more general method is described below. This third method may for example be performed by a processor in the access node. The processor then first obtains channel state information. This information comprises crosstalk coupling information on how CM and DM signals transmitted by the access node 100 are coupled to the signals received by the different CPEs. From this channel state information, the channel matrix *H(2M×2N)* can be derived which comprises the different line channel matrices $H^n(2M(n)×2N)$ for each communication line. Thereupon, the processor decomposes each line channel matrix $H^n$ into two channel matrices with the same dimensions as $H^{L(n)}$ and $H^{E(n)}$. This may for example be performed by a singular value decomposition of each line channel matrix as follows:

$$H^n(2M(n)\times 2N) = \widetilde{U^n}\Sigma^n V^{n*} = \mathrm{U}^n(2M(n)\times 2)V^{n*}(2\times 2N)$$

The channel matrix may then be constructed as follows:

$$H(2M\times 2N) = \mathrm{U}\,V^* = \begin{bmatrix} U^1 & & & & \\ & \ddots & & & \\ & & U^n & & \\ & & & \ddots & \\ & & & & U^N \end{bmatrix} \cdot \begin{bmatrix} V^{1*} \\ \vdots \\ V^{n*} \\ \vdots \\ V^{N*} \end{bmatrix}$$

Channel matrices U and *V\** thus have the same dimensions and structure as channel matrices $H^L$ and $H^E$ although the physical decomposition of the channel matrix *H* is not physically observable. In other words, the coefficients of channel matrix $V^{n*}$ correspond to coupling coefficients between actual physical, i.e. observable, CM and DM inputs in the respective analogue CM and DM analogue encoding parts of the access node 100 and a set of virtual CM and DM channel outputs that can be associated with a respective nth communication line 181. The coefficients of the channel matrix $U^n$ then correspond to coupling coefficients between these virtual CM and DM channel outputs associated with the respective nth communication line which now serve as inputs and actual physical CM and DM channel outputs that are observable in the respective analogue CM and DM decoding parts of the respective CPEs 124,125,126.

The processor may then construct the precoder matrix *P* using the inverse of the channel matrix *V\** thereby satisfying *V\*P = T* for a certain block diagonal scale matrix *T* with dimensions 2N×S. The nth diagonal block of T is of dimension 2×1 or 2×2, depending on whether there are one or two precoder input streams associated with communication line n. For example, taking $P = (V^*)^{-1}T$ with dimensions 2N×S where S is the total number of precoder input information streams. The 2M×S precoded channel then has the block-diagonal form *HP = UV\*P = UT*. Once the precoder 108 is in place, a 2M(n)×2 channel from two precoder inputs to *M(n)* CPE receivers 124-126 is obtained, if the corresponding diagonal block of T is 2×2, or a 2M(n)×1 channel from one precoder input to *M(n)* CPE receivers 124-126 is obtained, if the corresponding diagonal block of T is 2×1. This channel may be used to communicate with the different CPE in a single customer premise in different ways. The 2M(n)×1 channel may be considered as a virtual broadcast channel that may be used to communicate with the *M(n)* CPEs according to methods known in the art for broadcast channels. For example, by sending broadcast messages, or by sharing the channel by time-division or frequency-division multiple access schemes. The same principle applies for the 2M(n)×2 channel that may use postcoding along with broadcasting, time-division multiple access and/or frequency-division multiple access schemes. The one or two precoder inputs then access two different modes. These do not necessarily correspond one-to-one to the differential mode (DM) and common mode (CM). However, in typical situations one mode will couple strongly with a DM receiver, and the other mode will couple strongly with a CM receiver.

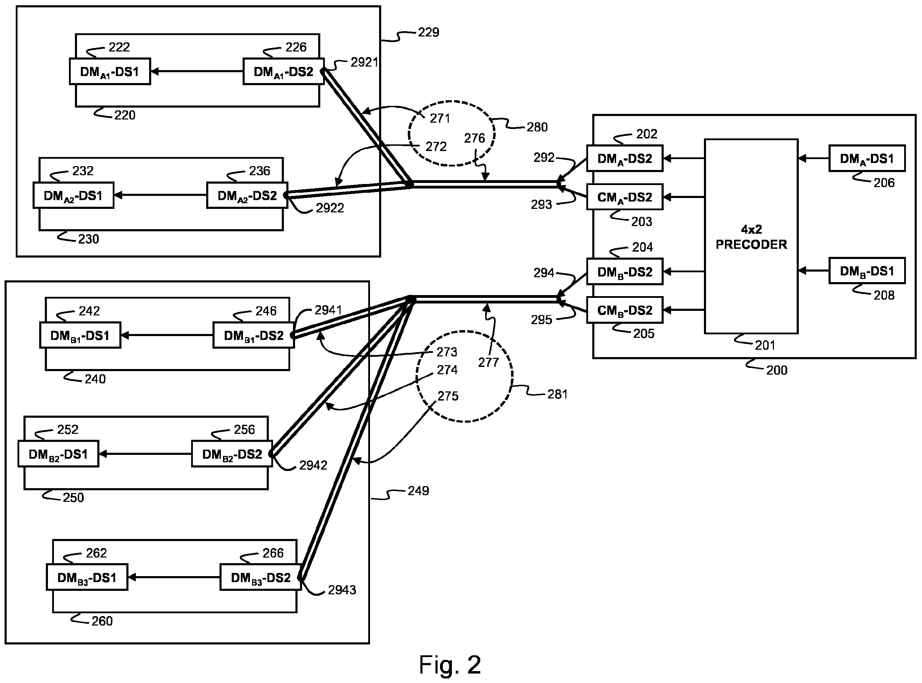

Fig. 2 illustrates a first way for downstream communication from the access node 100 to the various CPEs 121-129 according to an embodiment of the invention. This is illustrated by an exemplary downstream communication case between an access node 200 and CPEs 220, 230, 240, 250, 260. Access node 200 is connected by a first communication line 281 to a first customer premise 229 and by a second communication line 290 to a second customer premise 249. Communication lines 280, 281 both comprise a common segment 276, 277 which is part of a communication line bundle and, therefore, communication signals may be coupled from one communication line to the other and appear at the receiver as cross-talk. At the customer premise 229, line 280 is split into two terminal segments 271, 272 each connected to an analogue DM decoding part 226, 236 of the respective CPEs 220, 230. Similarly, at the customer premise 249, line 281 is split into three terminal segments 273, 274, 275 each connected to an analogue DM decoding part 246, 256, 266 of the respective CPEs 240, 250, 260. The outputs of the analogue decoding parts 226, 236, 246, 256 and 266 are then further processed in the respective digital DM decoding parts 222, 232, 242, 252, 262.

Access node 200 comprises two first digital processing stages 206, 208 for generating digital data streams that are to be transmitted as communication signals to the CPEs. The communication signals from stage 206 are destined for one or more of the CPEs 220, 230 in the first home 229 and the communication signals from stage 208 are destined for the CPEs 240, 250, 260 in the second home 249. The use case of Fig. 2 is thus capable of addressing only one data stream per home, i.e. to address only one CPE at a time. The communication signals are then processed by precoder 201 to produce CM and DM pre-compensated signals to be transmitted on each of the communication lines 280, 281. These pre-compensated signals are further processed by the two CM (203, 205) and DM (202, 204) analogue encoding stages thereby generating CM (293, 295) and DM (292, 294) inputs on the respective communication lines 280, 281. The $4\times2$ precoder performs the precoding by a $4\times2$ precoding matrix based on the derived channel matrix $V^*$ as described above wherein $S = 2$. The CPEs do not comprise CM processing capabilities. By the precoding, inter-home cross-talk will be minimized at the outputs 2921, 2922, 2941, 2942, 2943 as received by the respective analogue DM decoding parts 226, 236, 246, 256, 266.

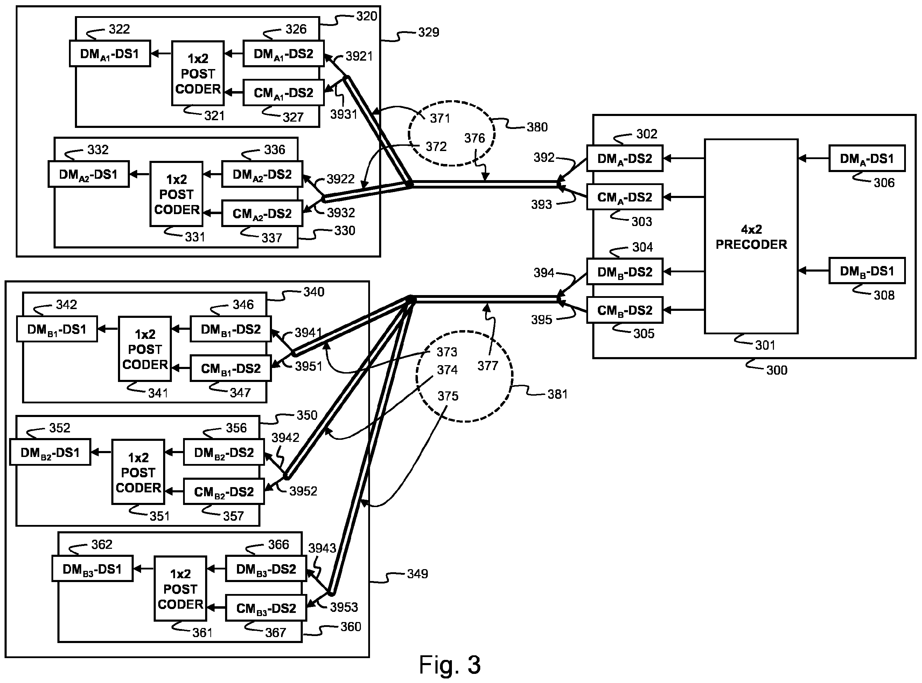

Fig. 3 illustrates a second way for performing downstream communication from the access node 100 to the various CPEs 121-129 according to an embodiment of the invention. This is illustrated by an exemplary downstream communication case between an access node 300 and CPEs 320, 330, 340, 350, 360. The numbering of Fig. 3 is similar to that of Fig. 2 except for the first digit. Only the differences between Fig. 3 and Fig. 2 will be further described. The CPEs 320, 330, 340, 350, 360 now each comprise both a CM 327, 337, 347, 357, 367 and DM 326, 336, 346, 356, 366 analogue decoding part. The CPEs further comprise a 1 by 2 postcoder 321, 331, 341, 351, 361 for post-compensating the CM and DM received signals to post-compensated received signals. In other words, as in Fig. 2, a single stream may be sent to each home 329, 349 which can then be received by one of the CPEs in the respective homes. The difference with the use case of Fig. 2 is that there is also a postcoder in the CPEs for postcoding the signals in the DM and CM modes associated with a single terminal segment. Because of this, the overall signal to noise ratio will be better than for the first use as illustrated by Fig. 2 case thereby improving the achievable throughput and/or power consumption. For the $k^{th}$ CPE associated with the $n^{th}$ communication line, there is an associated 2x2 submatrix of $U^n$, denoted $u^{n,k}$ which consists of rows 2k-1 and 2k of $U^n$. Further $T^n$ refers to the n-th block of T. The processor may construct the postcoder $Q^{n,k}(1x2)$ for CPE k of communication line n as the pseudo-inverse of $u^{n,k} T^n$. This ensures that the crosstalk is cancelled.

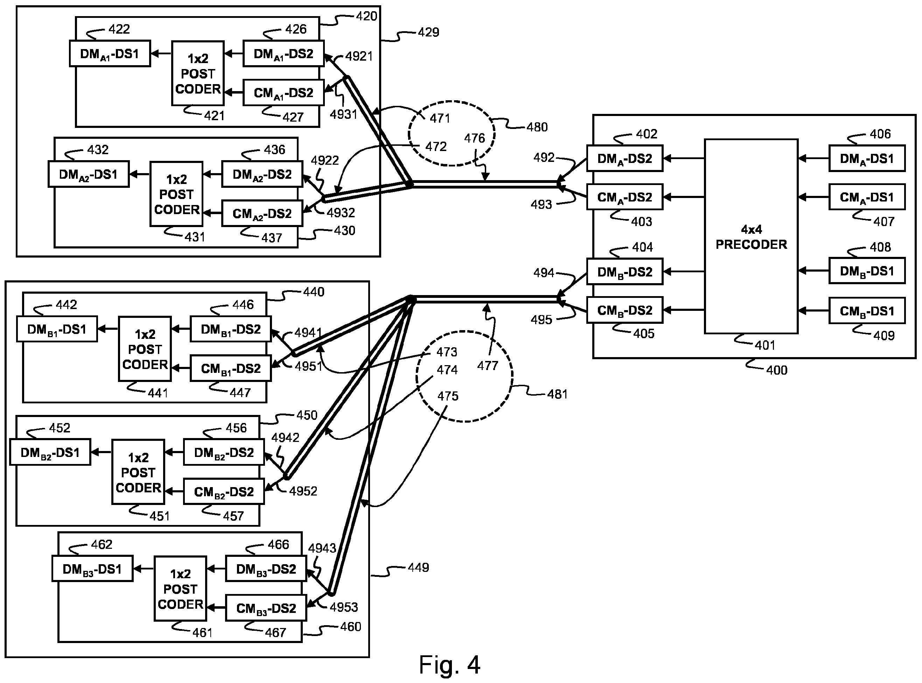

Fig. 4 illustrates a third way for downstream communication from the access node 100 to the various CPEs 121-129 according to an embodiment of the invention. This is illustrated by a downstream communication case between an access node 400 and CPEs 420, 430, 440, 450, 460. The numbering of Fig. 4 is similar to that of Fig. 3 except for the first digit. Only the differences between Fig. 4 and Fig. 3 will be further described. The CPEs 420, 430, 440, 450, 460 again each comprise both a CM 427, 437, 447, 457, 467 and DM 426, 436, 446, 456, 466 analogue decoding part. The CPEs further also comprise a 1 by 2 postcoder 421, 431, 441, 451, 461 for post-compensating the CM and DM received signals to post-compensated DM or CM received signals. In addition, access node 400 now comprises a 4x4 precoder that can take both a CM and DM input streams from the respective digital processing stages 406, 407, 408, 409 and generate therefrom pre-compensated DM and CM signals that are transmitted onto the communication lines 480, 481 by the respective analogue encoding parts 402-405. Therefore, each home 429, 449 may receive both one CM and one DM data stream. One CPE of the home may then receive the CM stream while another CPE receives the DM stream. In this case, the postcoding matrix for the postcoder of the CPE is derived from the product of the in-home channel matrix $U^n$ with the corresponding $2\times2$ diagonal block $T^n$ of the scale matrix $T$. The postcoding matrix will then be dependent on whether the CM or DM stream is to be received by the CPE.

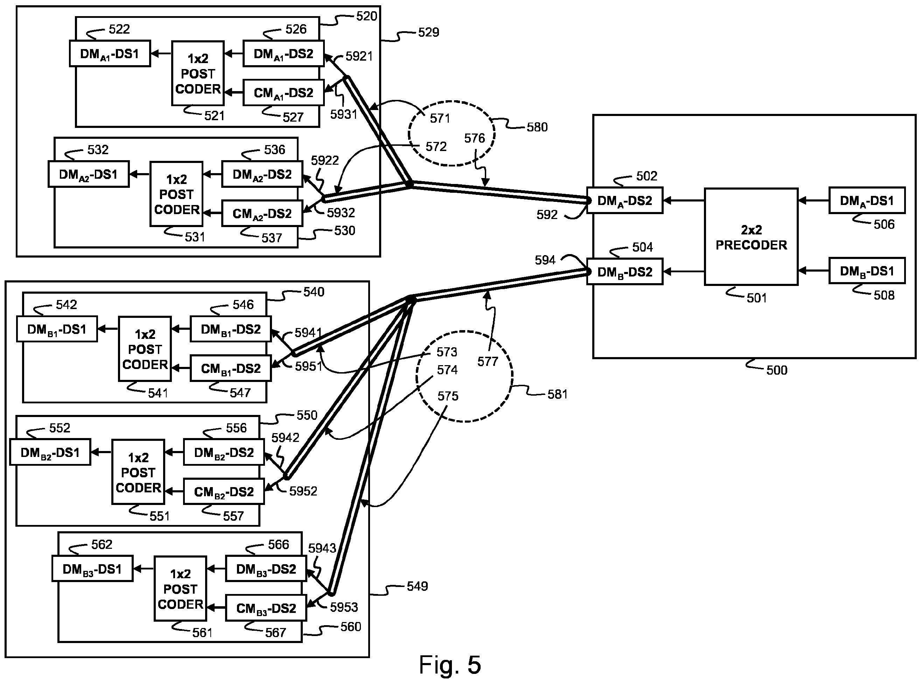

Fig. 5 illustrates a fourth way for downstream communication from the access node 100 to the various CPEs 121-129 according to an embodiment of the invention. This is illustrated by a downstream communication case between an access node 500 and CPEs 520, 530, 540, 550, 560. The numbering of Fig. 5 is similar to that of Fig. 3 except for the first digit. Only the differences between Fig. 5 and Fig. 3 will be further described. The CPEs of Fig. 5 are equivalent to the CPEs of Fig. 3. The access node 500 on the other hand does not support the common mode. Therefore, the precoder 501 performs the precoding based on a 2x2 precoding matrix that generates pre-compensated DM signals for each received stream from stages 506, 508. Therefore, only one DM stream can be received per home 529, 549. It is an advantage that, compared with the embodiment of Fig. 3, the access node 500 does not require CM analogue encoding parts in this embodiment, and the precoding matrix is smaller.

A general method for deriving the precoder and postcoder matrices to be used in this fourth way for downstream communication is as follows. The channel matrix in this case is a $2M\times N$ matrix $H$, rather than the $2M\times2N$ matrix discussed previously, since the access node has $N$ DM transceivers but no CM transceivers. The channel matrix $H(2M\times N)$ comprises different line channel matrices $H^n(2M(n)\times N)$ for each communication line. The processor decomposes each line channel matrix $H^n$ into the product of two channel matrices $U^n(2M(n)\times2)$ and $V^{n*}(2\times N)$ using a singular value decomposition or similar method. The channel may then be constructed as $H(2M\times N) = UV^*$ where $U(2M\times2N)$ is block diagonal with

blocks $U^n$ and $V^*(2N \times N)$ is formed by vertically concatenating the matrices $V^{n*}$ as follows:

$$H(2M \times N) = U\, V^* = \begin{bmatrix} U^1 & & & & \\ & \ddots & & & \\ & & U^n & & \\ & & & \ddots & \\ & & & & U^N \end{bmatrix} \cdot \begin{bmatrix} V^{1*} \\ \vdots \\ V^{n*} \\ \vdots \\ V^{N*} \end{bmatrix}$$

The processor may then construct the precoder matrix $P(N \times N)$ as $P = \left(V^*_{odd}\right)^{-1} T$ where $V^*_{odd}(N \times N)$ is a matrix consisting of the odd (first, third, fifth, and so on) rows of $V^*(2N \times N)$ and where $T(N \times N)$ is a diagonal scale matrix. The $2M \times 2N$ precoded channel then has the form $HP = UV^*P = U\left(V^*V^{*-1}_{odd}\right)T.$ For communication line n, the $2M(n) \times N$ precoded channel into the $M(n)$ CPEs associated with communication line n has the form $U^n X^n T^n$ where the first row of $X^n(2 \times N)$ is the product of an odd row of $V^*$ with $V^{*-1}_{odd}$, and hence is zero in all but the $n^{th}$ element, and where $T^{nn}$ is the $n^{th}$ diagonal element of T. For the $k^{th}$ CPE associated with the $n^{th}$ communication line, there is an associated 2x2 submatrix of $U^n$, denoted $U^{n,k}$ which consists of rows 2k-1 and 2k of $U^n$. The processor may construct the postcoder $Q^{n,k}(1 \times 2)$ of CPE k of communication line n as the first row of the 2x2 matrix inverse $(U^{n,k})^{-1}$. Then the end-to-end $1 \times N$ channel from the N precoder inputs of the access node to the postcoder output of the CPE is $Q^{n,k} U^{n,k} X^n T^{n,k}$ which is zero in all but the $n^{th}$ element, meaning that the postcoder output of the CPE is not affected by crosstalk from the precoder inputs of the other communication lines.

The above embodiments described a downstream case, but the same principles may be applied to an upstream processing case. The upstream processing case will be described below for the generic case with reference to Fig. 1. In the upstream case, communication signals are transmitted by the different CPEs 121-129 over the respective communication lines 180-182 to the respective DM and CM analogue decoding parts 102-107 of the access node 100. The communication signals transmitted by one CPE on a certain communication line will also couple to other communication lines and be received by other analogue decoding parts in the access node 100 as cross-talk. This coupling may occur between DM signals transmitted on different lines, between CM signals transmitted on different lines and between DM and CM signals transmitted on different lines but also transmitted on the same line. In the most generic case, the relation between the DM and CM signals transmitted by the CM and DM analogue encoding parts of the CPEs and the DM and CM signals received at the analogue CM and DM decoding parts 102-107 at the access node 100 is characterized by a channel matrix $H_{US}(2N \times 2M)$. The channel matrix may further be used to derive a postcoding matrix for use in a p-coder 108 in the access node 100 and/or a precoding matrix for use in a p-coder 1212, 1222, 1232, 1242, 1252, 1262, 1272, 1282, 1292 in a respective CPE 121-129. In the upstream case, p-coder 108 thus serves as a postcoder and p-coders 1212, 1222, 1232, 1242, 1252, 1262, 1272, 1282, 1292 in the respective CPEs serve as precoder.

According to an embodiment, upstream cross-talk cancellation may be performed by the postcoder 108. The $2N \times 2N$ postcoding matrix for use in the postcoder may then be derived from the channel matrix $H_{US}$. The channel matrix may for example be obtained by a pilot-based method. In this case the CM and DM signals are post-compensated in the postcoder after reception by the respective CM and DM analogue decoder parts 102-107. By this postcoding, the cross-talk in the CM and DM signals received at the access node 100 will be at least partially mitigated.

The more CPEs are connected to a single communication line, the more complex the cross-talk compensation become, i.e., the complexity is not only dependent on the number of communication lines, but also by the total number of connected CPEs. According to a preferred embodiment the computational complexity of the cross-talk mitigation and thus of the postcoder 108 is further reduced by the assumption that there will be nearly no cross-talk between the different terminal segments 140-148 as already described above for the downstream case. Following this assumption, for the upstream case, the channel matrix may be decomposed in an external channel matrix $H^E$ and in-home channel matrix $H^L$ as follows:

$$H_{US}(2N \times 2M) = H^E_{US}(2N \times 2N) . H^L_{US}(2N \times 2M)$$

and wherein $H^L$ is a block diagonal matrix which can be represented as follows:

$$H_{US}^L = \begin{bmatrix} H_{US}^{L(1)}(2\times 2M(1)) & & & & \\ & \ddots & & & \\ & & H_{US}^{L(n)}(2\times 2M(n)) & & \\ & & & \ddots & \\ & & & & H_{US}^{L(N)}(2\times 2M(N)) \end{bmatrix}$$

and wherein

$H_{US}^{L(n)}(2\times 2M(n))$ is the in-house channel matrix between DM and CM signals transmitted by the respective CPEs 124-126 and DM and CM signals at the left side of the common section 152 of the nth communication line 181; and

all other elements of the matrix $H_{US}^L$ are zeros;

and wherein the external channel matrix can be written as a horizontal concatenation of matrices $H_{US}^{E(n)}$ as follows:

$$H^E = \begin{bmatrix} H_{US}^{E(1)}(2N\times 2) & \dots & H_{US}^{E(n)}(2N\times 2) & \dots & H_{US}^{E(N)}(2N\times 2) \end{bmatrix}$$

and wherein $H_{US}^{E(n)}(2N\times 2)$ is the external channel matrix between DM and CM signals at the left side of the common section 152 of the nth communication line 181 and all input signals at the CM and DM analogue decoding part 102, 103, 104, 105, 106, 107 of the access node 100.

Consequently, the channel matrix $H_{US}^n$ describing the channel from the *M(n)* CPEs 124, 125, 126 connected to all communication lines 180, 181, 182 can be decomposed as::

$$H_{US}^n(2N\times 2M(n)) = H_{US}^{E(n)}(2N\times 2).H_{US}^{L(n)}(2\times 2M(n))$$

A method to derive the pre- and postcoders is to consider the solution space as finding a common generalized inverse. For a combination of certain CPEs, i.e. one active CPE for each customer premises, the generalized inverse forms a set of suitable postcoders. Because of the assumed absence of inter-home coupling between the terminal segments, the intersection between these sets is non-empty and a common postcoder exists. Therefore, cross-talk may be mitigated by a 2N×2N postcoder 108 at the access node 100 and by the 2×2 precoders 1212, 1222, 1232, 1242, 1252, 1262, 1272, 1282, 1292 in the respective CPEs.

A first method to obtain the pre- and postcoders is by brute force, i.e. by finding the pre- and postcoders from a measured channel matrix $H_{US}$ through iteration over possible pre- and postcoders. A second method to find suitable pre- and post-coders is through tracking. After obtaining feedback samples from the multiple CPEs, tracking allows to update the postcoder to reduce the error samples. The feedback sample allow to differentiate between inter-home crosstalk, used for updating the postcoder, and intra-home cross-talk used for updating the precoders.

A third, more general method is now described below. This third method may for example be performed by a processor in the access node. The processor then first obtains channel state information. From this channel state information, the channel matrix $H_{US}(2N\times 2M)$ can be derived which comprises the different line channel matrices $H_{US}^n(2N\times 2M(n))$ for each communication line. Thereupon, the processor decomposes each line channel matrix $H_{US}^n$ into two channel matrices with the same dimensions as $H_{US}^{L(n)}$ and $H_{US}^{E(n)}$. This may for example be performed by a singular value decomposition of each line channel matrix as follows:

$$H_{US}^n(2N\times 2M(n)) = \mathrm{U}_{US}^n \Sigma_{US}^n \tilde{V}_{US}^{n*} = \mathrm{U}_{US}^n(2N\times 2)V_{US}^{n*}(2\times 2M(n))$$

The channel matrix may then be constructed as follows:

$$H_{US}(2N\times 2M) = U_{US}\,V_{US}^* = [U_{US}^1 \quad \dots \quad U_{US}^n \quad \dots \quad U_{US}^N].\begin{bmatrix} V_{US}^{1*} & & & \\ & \ddots & & \\ & & V_{US}^{2n} & \\ & & & \ddots \\ & & & & V_{US}^N \end{bmatrix}$$

Channel matrices $U_{US}$ and $V_{US}^*$ thus have the same dimensions and structure as channel matrices $H_{US}^E$ and $H_{US}^L$ although the physical decomposition of the channel matrix $H_{US}$ is not physically observable. The processor may then construct the postcoder matrix $P_{US}$ as the generalized inverse of the channel matrix $U_{US}$ thereby satisfying $PU_{US}$ = $T$ for a certain block diagonal scale matrix $T$ with dimensions $S\times 2N$. For example, taking $P = T(U_{US})^{-1}$ with dimensions $S\times 2N$ where $S$ is the total number of postcoder output information streams. The n$^{th}$ diagonal block of T is of dimension $1\times 2$ or $2\times 2$, depending on whether there should be one or two postcoder output streams associated with communication line n. The $S\times 2M$ postcoded channel then has the block-diagonal form $PH_{US} = PU_{US}V_{US}^* = TV_{US}^*.$ Once the postcoder 108 is in place, a $2\times 2M(n)$ channel from $M(n)$ CPE receivers 124-126 to two postcoder outputs is obtained, if the corresponding diagonal block of $T$ is $2\times 2$, or a $1\times 2M(n)$ channel from $M(n)$ CPE receivers 124-126 to one postcoder output is obtained, if the corresponding diagonal block of $T$ is $1\times 2$. This channel may be used to communicate with the different CPE in a single customer premise in different ways. The $1\times 2M(n)$ channel may be considered as a virtual broadcast channel that may be used to communicate with the $M(n)$ CPEs according to methods known in the art for broadcast channels. For example, by sending broadcast messages, or by sharing the channel by time-division or frequency-division multiple access schemes. The same principle applies for the $2M(n)\times 2$ channel that may use precoding along with broadcasting, time-division multiple access and/or frequency-division multiple access schemes. The one or two postcoder outputs then access two different modes. These do not necessarily correspond one-to-one to the differential mode (DM) and common mode (CM). However, in typical situations one mode will couple strongly with a DM transmitter, and the other mode will couple strongly with a CM transmitter.

An upstream equivalent of the embodiment described with reference to Fig. 5 is described below. The upstream channel matrix in this case is a $N\times 2M$ matrix $H_{US}$, which comprises different upstream line channel matrices $H_{US}^n\big(N\times 2M(n)\big).$ The processor decomposes each upstream line channel matrix into the product $U_{US}^n(N\times 2)V_{US}^{n*}\big(2\times 2M(n)\big)$ using a singular value decomposition. The channel then has the representation $H_{US} = U_{US}\,V_{US}^*$ where $U_{US}(N\times 2N)$ is the horizontal concatenation of matrixes $U_{US}^n$ and $V_{US}^*$ is a block-diagonal matrix with diagonal blocks $V_{US}^{n*}.$ The postcoder $P_{US}(N\times N)$ may be constructed as $P_{US} = (U_{odd})^{-1}$ wherein $U_{odd}(N\times N)$ is a matrix consisting of the odd (first, third, fifth, and so on) columns of $U_{US}$. The $N\times 2M$ postcoded channel then has the form $P_{US}H_{US} = P_{US}U_{US}V_{US}^* = (U_{odd})^{-1}U_{US}V_{US}^*.$ For communication line n, the $N\times 2M(n)$ postcoded channel from the $M(n)$ CPEs associated with communication line n has the form $X_{US}^n V_{US}^{n*}$ where the first column of $X_{US}^n(N\times 2)$ is the product of $(U_{odd})^{-1}$ with an odd column of $U_{US}$, and hence is zero in all but the n$^{th}$ element. For the k$^{th}$ CPE associated with the n$^{th}$ communication line, there is an associated 2x2 submatrix of $V_{US}^{n*}$, denoted as $V_{US}^{n,k*}$, which consists of columns 2k-1 and 2k of $V_{US}^{n*}.$ The processor may construct the precoder $Q_{US}^{n,k}(2\times 1)$ for CPE k of communication line n as the first column of the 2x2 matrix inverse $\big(V_{US}^{n,k*}\big)^{-1}.$ The precoder may be multiplied by a scaling factor $T_{US}^{n,k}$ to ensure that transmit power constraints are met. Then the end to end Nx1 channel from the precoder input of the CPE to the N postcoder outputs at the access node is $X_{US}^{n} V_{US}^{n,k*} Q_{US}^{n,k} T_{US}^{n,k}$ which is zero in all but the n$^{th}$ element, meaning that the precoder input of the CPE does not generate crosstalk into the postcoder outputs of the other communication lines, at the access node.

It should be noted that in the above description the channel matrices are pertone channel matrices, but that the tone indexes were omitted for legibility.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. A precoder (108, 201, 301, 401) for precoding communication signals to be transmitted over a plurality of communication lines (180-182, 280-281, 380-381, 480-481) to respective customer premises equipment, CPEs (121-129, 220, 230, 240, 250, 260, 320, 330, 340, 350, 360, 420, 430, 440, 450, 460); and wherein the precoder is further configured to generate at least a first pre-compensated signal to be transmitted as a common mode, CM, signal over a first communication line of the communication lines, and to generate at least a second pre-compensated signal to be transmitted as a differential mode, DM, signal over the first communication line.

2. The precoder (108, 201, 301, 401) according to claim 1 wherein the first communication line (180, 280, 380, 480) comprises a common segment (151, 276, 376, 476) and one or more terminal segments (140-142, 271-272, 371-372, 471-472) to be connected to respective CPEs (121-123, 220, 230, 320, 330, 420, 430).

3. An access node (100, 200, 300, 400) comprising the precoder (108, 201, 301, 401) according to claim 1 or 2.

4. The access node (100, 200, 300, 400) according to claim 3 further comprising a first CM analogue encoding part (103, 105, 107) and a first DM analogue encoding part (102, 104, 106); and wherein each communication line comprises two electrical conductors; and wherein the first analogue CM encoding part is configured to transmit the CM signal over the first communication line as a common electrical difference between any of the two electrical conductors of the first communication line and a common reference; and wherein the first DM analogue encoding part is configured to transmit the DM signal over the first communication line as an electrical difference between the two electrical conductors of the first communication line.

5. The access node (100, 200, 300, 400) according to claim 3 or 4 further comprising a processor for configuration of the precoder; wherein the processor is further configured to obtain channel state information comprising crosstalk coupling information between CM and DM channel inputs at the access node side and CM and/or DM channel outputs at the CPE side, and to derive therefrom a precoding matrix for generation of the at least first and second pre-compensated signals by the precoder; and wherein the channel state information comprises a channel matrix decomposable into a first channel matrix and a second block diagonal matrix; and wherein the processor is configured to derive the precoding matrix based on the first channel matrix.

6. The access node (100, 200, 300, 400) according to claim 5 wherein the first channel matrix comprises coupling coefficients between the CM and DM channel inputs (292-295, 392-395, 492-495) at the access node side and first virtual CM and DM channel outputs associated with the first communication line; and wherein a block of the second block diagonal matrix comprises coupling coefficients between second virtual CM and DM channel inputs and CM and/or DM channel outputs (2921-2922, 3921-3922, 3931-3932, 4921-4922, 4931-4932) of the terminal segment associated with a respective CPE (121-123, 220, 230, 320, 330, 420, 430); and wherein the second virtual CM and DM channel inputs are associated with the first communication line and coupled to the first virtual CM and DM channel outputs.

7. The access node according to claim 6 wherein the processor is further configured to derive a postcoding matrix from the block, and to provide the postcoding matrix to a CPE (121-123, 320, 330, 420, 430) coupled to the terminal segment (140-142, 371-372, 471-472) for use in a postcoder (1212,1222,1232, 321, 331, 421, 431).

8. A customer premises equipment, CPE (121-123, 320, 330, 420, 430), comprising a postcoder (1212, 1222, 1232, 321, 331, 421, 431) configured to operate with the postcoding matrix of claim 7.

9. A postcoder (108) for postcoding communication signals received over a plurality of communication lines (180-182) from respective customer premises equipment, CPEs (121-129, 220, 230, 240, 250, 260, 320, 330, 340, 350, 360, 420, 430, 440, 450, 460); and wherein the postcoder (108) is further configured to generate postcoded signals from at least a first received signal received as a common mode, CM, signal from a first communication line (180) of the communication lines, and from at least a second received signal received as differential mode, DM, signal from the first communication line.

10. The postcoder (108) according to claim 9 wherein the first communication line (180) comprises a common segment (151) and one or more terminal segments (140-142) to be connected to respective CPEs (121-123).

11. An access node (100) comprising the postcoder (108) according to claim 9 or 10 and a processor for configuration of the postcoder; wherein the processor is further configured to obtain channel state information comprising crosstalk coupling information between CM and/or DM channel inputs at the CPE side and CM and DM channel outputs at the access node side, and to derive therefrom a postcoding matrix for generation of the postcoded signals by the postcoder; and wherein the channel state information comprises a channel matrix decomposable into a first block diagonal channel matrix and a second channel matrix; and wherein the processor is configured to derive the postcoding matrix based on the second channel matrix.

12. The access node (100) according to claim 11 wherein the second channel matrix comprises coupling coefficients between first virtual CM and DM channel inputs associated with the first communication line and the CM and DM channel outputs at the access node side and associated with the plurality of communication lines; and wherein a block of the first block diagonal matrix comprises coupling coefficients between the CM and/or DM channel inputs at the CPE side associated with the first communication line (121-123) and second virtual CM and DM channel outputs associated with the first communication line and coupled to the first virtual CM and DM channel inputs.

13. The access node (100) according to claim 12 wherein the processor is further configured to derive a precoding matrix from the block, and to provide the precoding matrix to a CPE (121-123) coupled to the terminal segment (140-142) for use in a precoder.

14. A customer premises equipment, CPE (121-123, 320, 330, 420, 430), comprising a precoder (1212, 1222, 1232, 321, 331, 421, 431) configured to operate with the precoding matrix of claim 13.

15. A postcoder (521, 531) for postcoding communication signals (5921, 5931, 5922, 5932) received over a first communication line (580) of a plurality of communication lines (580-581) from an access node (500) by a customer premises equipment, CPE (520, 530); and wherein the postcoder (521, 531) is further configured to generate postcoded signals from at least a first received signal received as a common mode, CM, signal (5931, 5932) from the first communication line (580) of the communication lines, and from at least a second received signal received as differential mode, DM, signal (5921, 5922) from the first communication line.

16. The postcoder (521, 531) according to claim 15 further configured to operate according to a postcoding matrix based on channel state information further comprising crosstalk coupling information between DM channel inputs (592, 594) at the access node (500) side and CM and DM channel outputs (5921, 5931, 5922, 5932) at the CPE (520, 530) side; and wherein the channel state information comprises a channel matrix decomposable into a first channel matrix and a second block diagonal matrix; and wherein the first channel matrix comprises coupling coefficients between DM channel inputs (592, 594) at the access node (500) side and first virtual CM and DM channel outputs associated with the first communication line; and wherein a block of the second block diagonal matrix comprises coupling coefficients between second virtual CM and DM channel inputs and CM and DM channel outputs (5921, 5931, 5922, 5932) at the CPE (520, 530) side; and wherein the second virtual CM and DM channel inputs are associated with the first communication line and coupled to the first virtual CM and DM channel outputs; and wherein the postcoding matrix is further based on the second block diagonal matrix.

17. A precoder for precoding communication signals transmitted over a first communication line (580) of a plurality of communication lines (580-581) from a customer premises equipment, CPE (520, 530) to an access node (500); and wherein the precoder is further configured to generate at least a first pre-compensated signal to be transmitted as a common mode, CM, signal over the first communication line, and to generate at least a second pre-compensated signal to be transmitted as a differential mode, DM, signal over the first communication line.

18. The precoder according to claim 17 further configured to operate according to a precoding matrix based on channel state information further comprising crosstalk coupling information between CM and DM channel inputs at the CPE side and DM channel outputs at the access node side; and wherein the channel state information comprises a channel matrix decomposable into a first block diagonal matrix and a second channel matrix; and wherein a block of the first block diagonal matrix comprises coupling coefficients between physical CM and DM channel inputs at the CPE side and first virtual CM and DM channel outputs; and wherein the second channel matrix comprises coupling coefficients between second virtual CM and DM channel inputs and physical DM channel outputs at the access node side; and wherein the first virtual CM and DM channel outputs are associated with the first communication line and coupled to the second virtual CM and DM channel outputs; and wherein the precoding matrix is further based on the first block diagonal matrix.

Fig. 1

Fig. 2

EP 3 457 578 A1

Fig. 3

Fig. 4

EP 3 457 578 A1

Fig. 5

Europäisches
Patentamt

European
Patent Office

Office européen
des brevets

## EUROPEAN SEARCH REPORT

Application Number

EP 17 19 1443

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/101875 A1 (HUAWEI TECH CO LTD [CN]) 3 July 2014 (2014-07-03) | 1-4,17, 18 | INV. H04B3/32 |
| A | * paragraph [0034] - paragraph [0045]; figures 3,4 * | 5-8 | |
| | ----- | | |
| X | EP 2 665 194 A1 (HUAWEI TECH CO LTD [CN]) 20 November 2013 (2013-11-20) | 1-4,17, 18 | |
| A | * paragraph [0081] - paragraph [0083]; figure 1 * | 5-8 | |
| | ----- | | |

TECHNICAL FIELDS
SEARCHED       (IPC)

H04B
H04M

~~The present search report has been drawn up for all claims~~

| Place of search | Date of completion of the search | Examiner |
|---|---|---|
| The Hague | 16 January 2018 | D'Alessandro, S |

EPO FORM 1503 03.82 (P04C01)

Europäisches
Patentamt

European
Patent Office

Office européen
des brevets

Application Number

EP 17 19 1443

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-8, 17, 18

☐ The present supplementary European search report has been drawn up for those parts of the European patent application which relate to the invention first mentioned in the claims (Rule 164 (1) EPC).

Europäisches
Patentamt
European
Patent Office
Office européen
des brevets

**LACK OF UNITY OF INVENTION
SHEET B**

Application Number

EP 17 19 1443

The Search Division considers that the present European patent application does not comply with the requirements of unity of invention and relates to several inventions or groups of inventions, namely:

    1. claims: 1-8, 17, 18

        Pre-coder
                        ---

    2. claims: 9-16

        Post-coder
                        ---

## ANNEX TO THE EUROPEAN SEARCH REPORT
## ON EUROPEAN PATENT APPLICATION NO.

EP 17 19 1443

This annex lists the patent family members relating to the patent documents cited in  the above-mentioned European search report.
The members are as contained in the European Patent Office EDP file on
The European Patent Office is in no way liable for these particulars which are merely given for the purpose of information.

16-01-2018

| Patent document cited in search report | | Publication date | Patent family member(s) | | Publication date |
|---|---|---|---|---|---|
| WO 2014101875 | A1 | 03-07-2014 | US | 2014185701 A1 | 03-07-2014 |
|  |  |  | WO | 2014101875 A1 | 03-07-2014 |
| EP 2665194 | A1 | 20-11-2013 | CN | 102651656 A | 29-08-2012 |
|  |  |  | EP | 2665194 A1 | 20-11-2013 |
|  |  |  | US | 2013336413 A1 | 19-12-2013 |
|  |  |  | WO | 2012113316 A1 | 30-08-2012 |

EPO FORM P0459

For more details about this annex : see Official Journal of the European Patent Office, No. 12/82